Europäisches Patentamt

European Patent Office

Office européen des brevets

(11) Veröffentlichungsnummer: **0 291 974**

**A2**

(19)

(12) **EUROPÄISCHE PATENTANMELDUNG**

(21) Anmeldenummer: **88108026.1**

(22) Anmeldetag: **19.05.88**

(51) Int. Cl.⁴: **B01D 53/02**

(30) Priorität: **22.05.87 DE 3717175**

(43) Veröffentlichungstag der Anmeldung:
**23.11.88 Patentblatt 88/47**

(84) Benannte Vertragsstaaten:
**AT BE CH DE ES FR GB GR IT LI LU NL SE**

(71) Anmelder: **Menzolit GmbH**
**Bahnhofstrasse 31**
**D-7527 Kraichtal-Menzingen(DE)**

(72) Erfinder: **Schleimer, Horst**
**Blumenstrasse 17**
**D-7600 Offenburg(DE)**
Erfinder: **Ehnert, Gerd**
**Brucknerstrasse 6**
**D-7523 Graben-Neudorf(DE)**
Erfinder: **von Paumgartten, Rolf**
**Spitzwegstrasse 6**
**D-6908 Wiesloch(DE)**

(74) Vertreter: **Dr.-Ing. Hans Lichti Dipl.-Ing. Heiner**
**Lichti Dipl.-Phys. Dr. Jost Lempert**
**Postfach 41 07 60 Durlacher Strasse 31**
**D-7500 Karlsruhe 41(DE)**

(54) **Verfahren zum Reinigen lösungsmittelbelasteter Abluft.**

(57) Die Erfindung schlägt ein neues Verfahren zum Reinigen von mit Lösungsmitteldämpfen belasteter Abluft vor. Das Verfahren ist insbesondere einsetzbar bei Abluft, die von bei der Kunststoffverarbeitung entstehenden Dämpfen polymerisierbarer Monomere, insbesondere synthetischer-organischer Lösungsmittel, wie Styrol belastet ist. Die Abluft wird in ansich bekannter Weise durch einen Filter geführt, wobei das Lösungsmittel sich am Filtermaterial anlagert. Erfindungsgemäß wird vorgeschlagen, daß als Filtermaterial bei der Verarbeitung, bei der die Abdämpfe ent10stehen, eingesetztes Füllstoffmaterial ist und das Füllstoffmaterial nach Aufnahme des Lösungsmittels aus der zu filternden Abluft als Füllstoff der entsprechenden Kunststoffverarbeitung zugeführt wird.

## Verfahren zum Reinigen lösungsmittelbelasteter Abluft

Die Erfindung betrifft ein Verfahren zum Reinigen von Abluft von bei Verarbeitungsprozessen entstehenden Abgasen, insbesondere Lösungsmitteldämpfen polymerisierbarer Monomerer, insbesondere synthetischer, organischer Lösungsmittel, wie Styrolacrvlate. Formaldehyd oder dergleichen, wobei die Abluft durch einen Filter geführt wird und das Lösungsmittel sich dem Filtermaterial anlagert, wie bei der Kunststoffverarbeitung.

Derartige Filterverfahren zum Reinigen von mit Lösungsmitteldämpfen, insbesondere mit synthetischen Lösungsmitteln belasteteter Abluft,sind an sich bekannt. Als Filtermaterial wird bekannterweise Aktivkohle eingesetzt, die aufgrund ihrer wirksamen Oberfläche eine gute Absorption ermöglicht. Ein Nachteil besteht bei chemischen leicht-reaktiven Anlagerungsprodukten darin, daß die Produkte auf dem Filtermaterial polymerisieren bzw. reagieren und sich chemisch verändern und dadurch entweder nicht in geeigneter Form zurückgewonnen werden können, oder die Oberfläche des Filtermaterials belegen. Belastete Aktivkohle muß als Sondermüll mit der damit verbundenen Problemen und Kosten entsorgt werden. Wenn die Aktivkohle zurückgewonnen werden soll ist dies mit erheblichen Schwierigkeiten verbunden, da die polymerisierten Anteile sich praktisch nicht mehr auswaschen lassen.

Darüberhinaus verlagert sich das Problem der in der Abluft enthaltenen Schadstoffe bei der Rückgewinnung durch Auswaschen der Aktivkohle mittels Wasser in einer Strippkolonne auf das Wasser; die belastenden Stoffe sind damit nicht aus der Umwelt entfernt, sondern müssen gegebenenfalls weiter vom Waschwasser abgetrennt werden. Insgesamt hier sind hierbei hohe Energie- und Betriebskosten gegeben, ohne daß eine optimale umweltfreundliche Lösung gegeben ist.

Weiterhin wurde schon vorgeschlagen, einen an sich bekannten Biofilter auch bei synthetisch hergestellten, nicht in der Natur oder natürlich vorkommended Lösungsmitteln einzusetzen. Überraschenderweise hat sich eine recht gute Wirksamkeit eines derartigen Biofilters im Hinblick auf den Abbau der synthetischen Lösungsmittleprodukte im Biofilter gezeigt. Es ist aber so, daß bei der Kombination von Absorption und biologischen Abbau im Biofilter immer ein Rest der Lösungsmittle an der Filtermasse noch anlagert, wenn diese ausgetauscht werden muß. Es handelt sich um belastetes Material, daß in geordneter Weise entsorgt, bzw. deponiert werden muß.

Schließlich wurde die thermische Nachverbrennung der Lösungsmittel belasteten Dämpfe vorgeschlagen, was ebenfalls insbesondere mit hohem Energiebedarf verbunden ist.

Die vorgenannten Probleme haben sich duch die Verschärfung der Technischen Anleitung Luft verstärkt, die in vielen Bereichen nicht in wirtschaftlich vernünftiger und angemessener Weise durch im Stande der Technik großtechnisch eingesetzter Verfahren erfüllt werden kann, wobei lediglich der Vorschlag des Biofilters hier gegenüber dem früheren Stand der Technik einen neuen Weg zeigt.

Der Erfindung liegt die Aufgabe zugrunde, ein weiteres Verfahren zur Reinigung von mit Lösungsmittelsdämpfen belasteter Abluft vorzuschlagen, bei dem zumindestens bei einem Teil der problematischen Lösungsmittel insbesondere keinerlei weiter zu ent sorgende oder deponierende Abfälle,seien sie flüssig oder fest,anfallen.

Erfindungsgemäß wird die genannte Aufgabe bei einem Verfahren der eingangs genannten Art dadurch gelöst, daß als Filtermaterial Füllstoffmaterial verwendet wird, das bei der Verarbeitung, bei der die Abdämpfe entstehen, eingesetzt wird oder werden kann, und daß das Füllstoffmaterial nach Aufnahme des Lösungsmittels aus der zu filternden Abluft als Füllstoff der entsprechenden Verarbeitung zugeführt wird. Die Erfindung macht also den überraschenden, in der Rückschau möglicherweise einfachen Vorschlag, nicht als Filtermaterial ein zusätzliches Drittmaterial, wie Aktivkohle, Rinde oder dergleichen zu verwenden, sondern die bei der Verarbeitung, wie Kunststoffverarbeitung oder auch Spanplattenherstellung, worunter hier der gesamte Verarbeitungsprozeß einschließlich, Lagern,Mischen,Verpressen verstanden wird, entstehenden Dämpfen durch Materialien als Filter zu leiten, die bei der Verarbeitung selbst als Füllstoff eingesetzt werden, wie vorzugsweise Aluminiumhydroxide, (z.B. Giludral, Socal), Kalziumcarbonate (z.B. Wical, Millicarb, Calcitit) oder dergleichen bei der Kunststoffverarbeitung. Holzspäne, Sägemehl bei der Holzspanplattenverarbeitung etc.

Hierdurch wird in überraschender Weise das Problem der Weiterverarbeitung, Rückgewinnung oder Endlagerung des Filtermaterials in einfacher und und optimaler Weise geregelt, da das mit dem Styrol belastete Filtermaterial nun als Füllstoff dem Verarbeitungsprozeß zugeführt werden kann,bei dem das durch Reinigung aus Abluft entnommene und am Filtermaterial angelagerte Lösungsmittel ohnehin als Lösungsmittel zusätzlich zugeführt und verwendet wird.

Mit anderen Worten wird also das Filtermaterial durch das erfindungsgemäße Verfahren der Verwendung als Ausgangsmaterial in der Produktion geführt und hierdurch das in der Produktion ein gesetztes Lösungsmittel, wie Styrol, das entwichen und im Filtermaterial angelagert ist, wieder dem Produktionsprozeß zugeführt, indem es mit dem Filtermaterial, dieser als Füllstoff, in diesem eingesetzt wird.

Während das erfindungsgemäße Verfahren zur Reinigung unterschiedlicher bei der Kunststoffverarbeitung anfallender Lösungsmittel einsetzbar ist, wird es bevorzugt bei Lösungsmitteldämpfen polymerisierbarer Monomere eingesetzt, da diese bei der Verarbeitung der Kunststoffmaterialien, wie z.B. Duroplast-Harzen ohnehin polymerisieren, daher die Polymerisierung auf dem Filter kein Nachteil und kein Hindernis ist, wie dies bei der Verwendung von Aktivkohle als Filtermaterial, zum Teil auch bei Biofiltern demgegenüber der Fall ist. Weiter wird bei wasserlöslichen Produkten die aufwendige Absorption der Aktivkohle und nachfolgende Aufarbeitung vermieden.

Das Verfahren beinhaltet keine zusätzliche Umweltbelastung, da daß Filtermaterial der Kunststoff-Weiterverarbeitung wieder zugeführt wird. Eine Belastung von Abwässern oder dergleichen wird vermieden. Betriebskosten und Energiebedarf halten sich ebenfalls in Grenzen, da keine aufwendigen Rückgewinnungsverfahren oder Nachverbrennungen eingesetzt werden müssen.Der geringe Nachteil, daß die überlicherweise bei der Kunststoffverarbeitung eingesetzten Füllmaterialien eine geringere Absorptionsfähigkeit aufweisen als Aktivkohle, so daß der Filter zur Erreichung gleicher Reinigungskapazität größer ausgebildet sein muß, wird durch die vorgenannten Vorteile mehr als aufgewogen, insbesondere auch im Hinblick darauf, daß Filtermaterial problemlos in kürzeren Abständen ausgetauscht werden kann, als dies bei Aktivkohle vertretbar ist.

In bevorzugter Ausgestaltung ist vorgesehen, daß der Behälter so groß dimensioniert wird, daß die Verweilzeit der zu reinigenden Abluft lange genug ist, um eine ausreichende Absorption an den Teilchenoberflächen zu ermöglichen. Ein Behälter mit einem Volumen von mehr als 50 m hat sich als geeignet heraus gestellt. Es ist aber technisch durchaus möglich, ein kleineres Volumen zum Einsatz mit einem kontinuierlichen Prozeß vorzusehen.

Während also grundsätzlich das Filtermaterial in einem Behälter angeordnet sein kann, der durch die Abluft durchstrichen wird und dann diskontinuierlich und chargenweise der Weiterverarbeitung zugeführt wird, sieht daher eine äußerst bevorzugte Ausgestaltung vor, daß die Förderung des Filtermaterials kontinuierlich erfolgt. In weiterer bevorzugter Ausgestaltung ist vorgesehen, daß das Füllstoffmaterial im Gegenstrom zu seiner Förderrichtung mit der zu reinigenden Abluft beaufschlagt wird und insbesondere, daß das Füllstoffmaterial fluidisch gefördert wird.

Bei Laborversuchen zur Styroladsorption an Füllstoffen konnte eine spezifische Absorption von ungefähr 0,2 g Styrol pro kg Wical ($CuCO_3$) und ca. 0,4 g Styrol pro kg Giludral ($Al(OH)_3$).

Weitere Vorteile und Merkmale der Erfindung ergeben sich aus den weiteren Unteransprüchen sowie der nachfolgenden Beschreibung, in der Ausführungsbeispiele der Erfindung unter Bezugnahme auf die Zeichnung im einzelnen erläutert sind. Dabei zeigt:

Figur 1 Eine schematische Darstellung zum Ablauf einer ersten äußerst bevorzugten Ausführungsform des erfindungsgemäßen Verfahrens;und

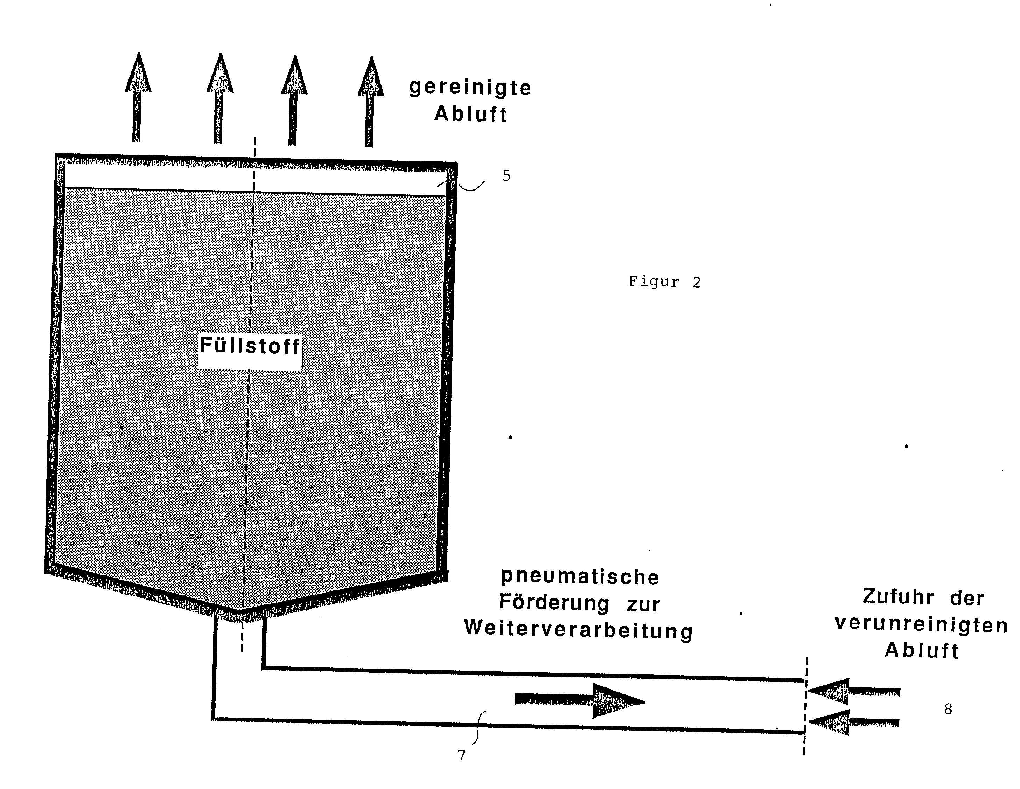

Figur 2 eine Darstellung eines Füllstofffilters bei praktisch kontinuierlicher Zuförderung des Füllstoffs zur Weiterverarbeitung.

Der frische Füllstoff wird in einem Füllstoffsilo 1 gelagert. Von dort wird er über eine Fördereinrichtung 2, wie eine pneumatische Förderung einer Dosier- oder Wiegeeinrichtung 3 zugefördert. Durch die Einrichtung 3 wird eine Charge Füllstoff abgewogen und anschließend einem Filter 5, der gerade eine Charge Füllstoff enthält,zugeführt. Eine typische Chargengröße liegt bei etwa 500 kg Füllstoff, wie Aluminiumhydroxid oder Kalziumcarbonat od.dgl. Durch das Filter 5 wird von der Wischeinrichtung für das herzustellende Kunststoffmaterial aus Rohkunststoff, Lösungsmittel, Füllstoff, Glasfasern etc., also dem sogenannten Dissolver 6, in dem aufgrund des verwendeten organischen Lösungsmittels, wie insbesondere Styrol, Lösungsdämpfe in geringer Menge aber mit sehr hoher Konzentration anfallen, diese abgesaugt, wobei sich ein sehr großer Anteil des Lösungsmittels an dem als Filtermaterial dienenden Füllstoff im Filter 5 ablagert. In bevorzugter Weise wird die Füllstoffcharge, die sich bei der Verwendung der vorherigen im Dissolver im Filter 5 befunden hat, als nächste Füllstoffcharge dem Dissolver zugeführt, während in den Filter 5 eine neue, durch die Einrichtung 4 abgewogene Charge eingefüllt wird.

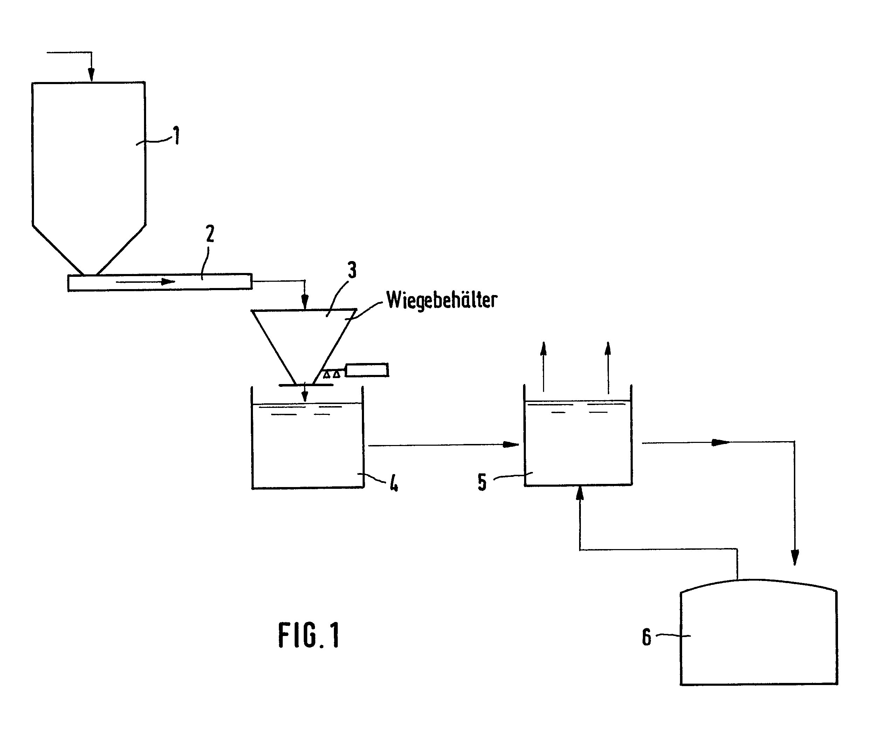

Eine diskontinuierliche Förderung ist auch möglich, wenn beispielsweise die verunreinigte Abluft durch das gesamte Füllstoffsilo (Bezugszeichen 1 in Fig.1) hindurchgeführt wird, aus dem nur eine gegenüber dem Silo innerhalb geringere Charge jeweils kontinuierlich abgenommen und dem Dissolver 6 zugeführt wird.

**Ansprüche**

1. Verfahren zum Reinigen von Abluft von bei Verarbeitungsprozessen entstehenden Abgasen, insbesondere Lösungsmitteldämpfen polymerisierbarer Monomerer, insbesondere synthetischer, organischer Lösungsmittel, wie Styrolacrylate, Formaldehyd oder dergleichen, wobei die Abluft durch einen Filter geführt wird und das Lösungsmittel sich dem Filtermaterial anlagert, wie bei der Kunststoffverarbeitung, dadurch gekennzeichnet, daß als Filtermaterial Füllstoffmaterial verwendet wird, das bei der Verarbeitung, bei der die Abdämpfe entstehen, eingesetzt wird oder eingesetzt werden kann, und daß das Füllstoffmaterial nach Aufnahme des Lösungsmittels aus der zu filternden Abluft als Füllstoff der entsprechenden Verarbeitung zugeführt wird.

2. Verfahren nach Anspruch 1, dadurch gekennzeichnet, daß Aluminiumhydroxide, Kalziumcarbonate oder dergleichen eingesetzt werden.

3. Verfahren nach Anspruch 1 oder 2, dadurch gekennzeichnet, daß das Füllstoffmaterial diskontinuierlich chargenweise der zu filternden Abluft ausgesetzt und der Weiterverarbeitung zugeführt wird.

4. Verfahren nach Anspruch 3, dadurch gekennzeichnet, daß das Füllstoffmaterial in einem Behälter gefüllt wird, dem die Abluft von unten zugeführt wird und der Füllstoff von Zeit zu Zeit ausgetragen wird.

5. Verfahren nach Anspruch 4, dadurch gekennzeichnet, daß der Behälter so groß dimensioniert wird, daß die Verweilzeit der zu reinigenden Abluft lange genug ist, um eine ausreichende Absorption an den Teilchenoberflächen zu ermöglichen.

6. Verfahren nach einem der Ansprüche 3 bis 5, dadurch gekennzeichnet, daß als Füllstoff einer Charge das Filtermaterial der vorangehenden Charge eingesetzt wird.

7. Verfahren nach einem der Ansprüche 3 bis 6, dadurch gekennzeichnet, daß der als Filtermaterial dienende Füllstoff nach dem Austragen aus dem Filter zunächst in einem Vorratssilo zwischengespeichert wird.

8. Verfahren nach Anspruch 1 oder 2, dadurch gekennzeichnet, daß das als Filter dienende Füllstoffmaterial nach Durchstreichen der Abluft kontinuierlich dem Weiterverarbeitungsprozeß, gegebenenfalls über Zwischenspeicherung zugeführt wird.

9. Verfahren nach Anspruch 6, dadurch gekennzeichnet, daß das Füllstoffmaterial im Gegenstrom zu seiner Förderrichtung mit der zu reinigenden Abluft beaufschlagt wird.

10. Verfahren nach Anspruch 6 oder 7, dadurch gekennzeichnet, daß das Füllstoffmaterial fluidisch gefördert wird.

Wiegebehälter

FIG.1

**gereinigte Abluft**

5

Figur 2

**Füllstoff**

**pneumatische Förderung zur Weiterverarbeitung**

**Zufuhr der verunreinigten Abluft**

8

7

0 291 974